# EUROPÄISCHE PATENTANMELDUNG

(11) **EP 1 318 701 A2**
(43) Veröffentlichungstag der Anmeldung: **11.06.2003**
(21) Anmeldenummer: 02026041.0
(22) Anmeldetag: 22.11.2002
(51) Int. Cl.: H05B 33/08

(54) **Anordnung zur Ansteuerung einer Anzahl von lichtemittierenden Dioden im Verfahren zum Betreiben einer derartigen Anordnung**

(30) Priorität: 05.12.2001 DE 10159765
(71) Anmelder: AUDI AG, 85045 Ingolstadt (DE)
(72) Erfinder: Maiwald, Stefan, 85084 Reichertshofen (DE)
(74) Vertreter: Thielmann, Frank

(57) **Zusammenfassung**

Die vorliegende Erfindung betrifft eine Anordnung zur Ansteuerung einer Anzahl n von lichtemittierenden Dioden mit einem Versorgungsspannungsanschluß (V_{B}); einer Serienschaltung einer Anzahl n von lichtemittierenden Dioden (D1 bis D6); wobei seriell zur Serienschaltung der Anzahl n von lichtemittierenden Dioden (D1 bis D6) eine erste Stromquelle(11) und ein erster Schalter (Q1) angeordnet sind; wobei die Anordnung weiterhin aufweist: eine Abgriffsleitung (A1), die eine Anzahl m, m^{<}n, der Anzahl n von lichtemittierenden Dioden (D1 bis D6) überbrückt, wobei in der Abgriffsleitung (A2) eine zweite Stromquelle (12) und ein zweiter Schalter (Q2) angeordnet sind. Sie betrifft überdies ein entsprechendes Verfahren zum Betreiben einer derartigen Anordnung.

## Beschreibung

Die vorliegende Erfindung betrifft eine Anordnung zur Ansteuerung einer Anzahl n von lichtemittierenden Dioden mit einem Versorgungsspannungsanschluß und einer Serienschaltung einer Anzahl n von lichtemittierenden Dioden, wobei seriell zur Serienschaltung der Anzahl n von lichtemittierenden Dioden eine erste Stromquelle und ein erster Schalter angeordnet sind. Sie betrifft überdies ein Verfahren zum Betreiben einer derartigen Anordnung.

Im Kraftfahrzeugbereich werden zunehmend bisher mit Glühlampen realisierte Beleuchtungen mit lichtemittierenden Dioden (LEDs) realisiert. Meistens werden pro Beleuchtungseinheit mehrere LEDs verwendet. Bei Veränderungen der Bordnetzspannung wird jedoch je nach Auslegung der Beleuchtungseinheit die Verlustleistung zu hoch oder die Helligkeit zu niedrig. Aufgrund der exponentiellen Strom-/Spannungskennlinie von LEDs ist dieser Nachteil wesentlich stärker ausgeprägt als bei Glühlampen.

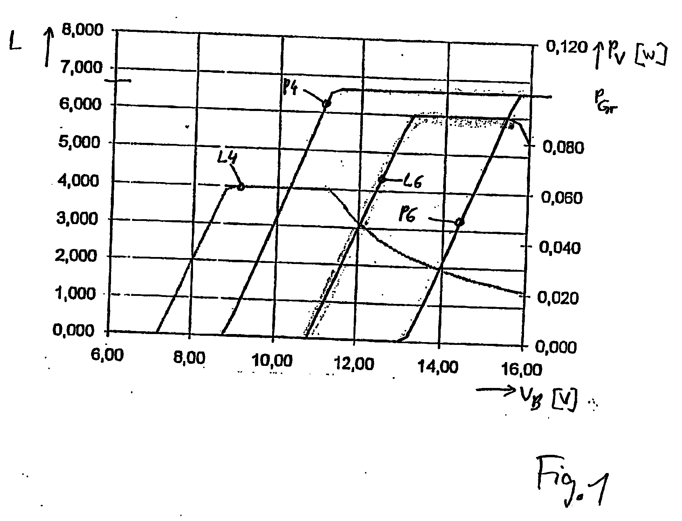

Zur Verdeutlichung dieser der Erfindung zugrundeliegenden Problematik wird auf Figur 1 verwiesen: Hier ist einerseits die Abhängigkeit der Verlustleistung P_{V} von der Bordnetzspannung V_{B}, sowie der relativen Lichtstärke L von der Bordnetzspannung V_{B} verdeutlicht. Wird beispielsweise die Beleuchtungseinheit durch vier in Serie geschaltete LEDs realisiert, so läßt sich bei Bordnetzspannungen zwischen ca. 9 und 11 Volt eine relative Lichtstärke von 4 erzielen, siehe Kurvenzug L4 in Figur 1. Bei Bordnetzspannungen V_{B} größer als 11 Volt erreicht die zugehörige Verlustleistung P_{V} einen Grenzwert P_{Gr}, siehe Kurvenzug P4 in Figur 1. Damit dieser Grenzwert P_{Gr} nicht überschritten wird, muß der Strom durch die Dioden gesenkt werden, was zu einer Reduktion der Lichtleistung führt. Hierbei besteht die Gefahr, daß bei höheren Werten der Bordnetzspannung V_{B} eine vom Gesetz vorgegebene Mindestlichtstärke unterschritten wird. Wird die entsprechende Beleuchtungseinheit mit 6 LEDs realisiert, so liegt zwar die Verlustleistung P_{V} im gesamten realistischen Bereich der Bordnetzspannung V_{B} unterhalb des Grenzwerts P_{Gr}, vergleiche Kurvenzug P6 in Figur 1, allerdings sinkt für Bordnetzspannungen V_{B} unterhalb ca. 12 Volt die Lichtstärke auf unzureichende Werte ab, vergleiche Kurvenzug L6 in Figur 1.

In diesem Zusammenhang sei die DE199 54 911 A1 erwähnt, die LEDs zur Realisierung von Anzeigemustern, beispielsweise von unterschiedlich langen Leuchtbalken verwendet. Eine schwankende Anzahl von LEDs zur Realisierung unterschiedlich langer Leuchtbalken wird dadurch von einem gleichbleibenden Strom durchflossen, daß diese durch eine geeignete zeitliche Impulsüberlappung angesteuert werden.

Die DE 92 18 548.7 betrifft eine Anzeige mit Leuchtdioden zum Anschluß einer Spannungsquelle im Mittel- oder Hochspannungsbereich. Zur Realisierung von Mustern werden zumindest einzelne Leuchtdioden mittels Schaltern überbrückt.

Der vorliegenden Erfindung liegt die Aufgabe zugrunde, die Anordnung der eingangs genannten Art derart weiterzubilden, daß in einem weiten Bereich der Versorgungsspannung eine vorgebbare Lichtstärke nicht unterschritten wird. Die Aufgabe besteht weiterhin darin, ein entsprechendes Verfahren zum Betreiben einer derartigen Anordnung zur Verfügung zu stellen.

Diese Aufgabe wird gelöst durch eine Anordnung mit den Merkmalen von Patentanspruch 1 und ein Verfahren mit den Merkmalen von Patentanspruch 13.

Der Erfindung liegt die Erkenntnis zugrunde, daß die Anzahl der aktivierten Dioden in Abhängigkeit der Versorgungsspannung variiert werden kann und zwar durch Bildung von Abgriffsleitungen, in denen jeweils eine Stromquelle und ein Schalter angeordnet sind. Mit Bezug auf Figur 1 wird erfindungsgemäß bei einer Bordnetzspannung V_{B} von 12 Volt von 4 LEDs auf 6 LEDs umgeschaltet und umgekehrt. Dies resultiert in niedrigen Kosten, da sich die Verlustleistung optimal niedrig halten läßt. Der Aufwand für Kühlungsbedarf, insbesondere Kühlkörper für zugeordnete Treiberbauteile kann daher gering ausfallen. Weiterhin lassen sich insbesondere im Kraftfahrzeugbereich bei variabler Bordnetzspannung vorgegebene Mindestanforderungen an die Lichtstärke über einen großen Bereich erfüllen.

Bevorzugt umfaßt die Anordnung eine Vielzahl von Abgriffsleitungen mit jeweils zugeordneter Stromquelle und zugeordnetem Schalter, wobei von jeder Abgriffsleitung eine unterschiedliche Anzahl von lichtemittierenden Dioden überbrückt wird. Je höher die Anzahl derartiger Abgriffsleitungen, desto präziser lassen sich vorgegebene Werte von Lichtstärke und Verlustleistung einhalten.

Die Schalter können als Low-Side-Switches oder als High-Side-Switches ausgeführt sein.

Bevorzugt sind die Stromquellen unterschiedlich dimensioniert, wobei einer Abgriffsleitung eine auf einen umso höheren Strom dimensionierte Stromquelle zugeordnet ist, je mehr lichtemittierende Dioden von ihr überbrückt werden. Der Vorteil dieser Maßnahme besteht darin, daß dadurch weniger Leuchtdioden mit einem höheren Strom betrieben werden können, um die gesamte mit ihnen erzielte Lichtstärke zu vergrößern. Sie trägt dazu bei, bei unterschiedlicher Anzahl von aktivierten LEDs dennoch eine nahezu gleichbleibende Lichtstärke zu erzielen.

Die Verwendung nur einer Strommeßvorrichtung zur Regelung des die LEDs durchströmenden Stroms genügt, wenn die mindestens eine Abgriffsleitung parallel geschaltet ist zur Serienschaltung aus der von ihr überbrückten Anzahl m von lichtemittierenden Dioden, der ersten Stromquelle und dem ersten Schalter, wobei seriell zu dieser Parallelschaltung die Strommeßvorrichtung angeordnet ist. Hierbei ist bevorzugt, wenn die Strommeßvorrichtung ein Meßsignal an eine Steuervorrichtung bereitstellt, wobei die Steuervorrichtung ausgelegt ist, die an die lichtemittierenden Dioden bereitgestellte Energie im Hinblick auf die zugehörige Stromquelle zu variieren, insbesondere zu regeln. Hierdurch wird sichergestellt, daß die jeweilige Stromquelle nur in ihrem zulässigen Bereich betrieben wird und dennoch trotz Variation der aktivierten LEDs eine möglichst gleichbleibende Lichtstärke erzielt wird.

Bevorzugt wird die Energie in Form eines pulsweitenmodulierten Signals zugeführt, wobei die Steuervorrichtung ausgelegt ist, die Energie durch Änderung der Parameter des pulsweitenmodulierten Signals zu variieren. In einem besonders bevorzugten Ausführungsbeispiel umfaßt die Anordnung weiterhin ein lichtempfindliches Element zur Ermittlung der von den eingeschalteten lichtemittierten Dioden abgegebenen Lichtstärke. Das von dem lichtempfindlichen Element gelieferte Signal kann dann als Eingangssignal für die Steuervorrichtung verwendet werden, um den Strom durch die aktiven LEDs, beispielsweise durch Vorgabe eines Sollwerts, zu regeln.

Die Steuervorrichtung ist insbesondere ausgelegt, die Serienschaltung der Anzahl n von lichtemittierenden Dioden oder eine der Abgriffsleitungen zu aktivieren in Abhängigkeit einer Größe, die mit der am Versorgungsspannungsanschluß angelegten Vorsorgungsspannung korreliert ist. Die mit der Versorgungsspannung korrelierte Größe ist bevorzugt die von den eingeschalteten Dioden erzielte Lichtstärke und/oder die in der Anordnung, insbesondere in den Dioden, umgesetzte Verlustleistung und/oder die Versorgungsspannung selbst.

Eine besonders kostengünstige Realisierung läßt sich erzielen bei einer Realisierung der mindestens einen Stromquelle als ohmscher Widerstand.

Weitere vorteilhafte Weiterbildungen der Erfindung sind in den Unteransprüchen definiert.

Ein Ausführungsbeispiel wird im Folgenden unter Hinweis auf die beigefügten Zeichnungen näher beschrieben. Es stellen dar:
- Figur 1: den Verlauf der relativen Lichtstärke L und der Verlustleistung P_{V} in Abhängigkeit der Bordnetzspannung V_{B} bei Realisierung einer Beleuchtungseinheit mit 4 oder 6 LEDs; und
- Figur 2: einen Prinzipschaltplan für ein Ausführungsbeispiel einer erfindungsgemäßen Anordnung.

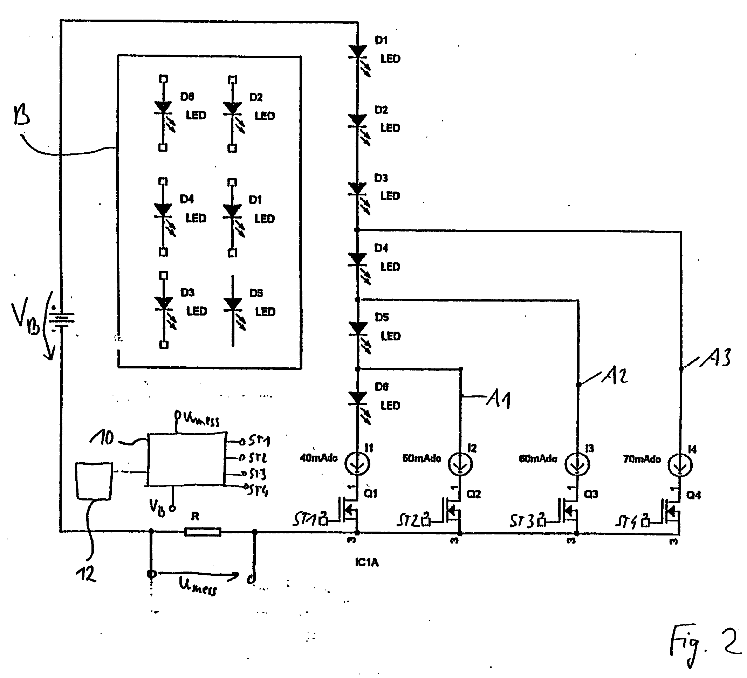

Figur 2 zeigt eine Serienschaltung von 6 LEDs D1 bis D6. Seriell zu den Dioden ist eine erste Stromquelle I1 angeordnet, die auf einen Maximalstrom von 40 mA ausgelegt ist. Seriell zur Stromquelle 11 ist ein Schalter Q1 angeordnet, der mit einem entsprechenden Anschluß einer Steuervorrichtung 10 verbunden ist. Die serielle Anordnung aus den Dioden D1 bis D6, der Stromquelle 11 sowie des Schalters Q1 wird gespeist von einer Spannungsquelle VB.

Parallel zur Serienschaltung aus der Diode D6, der Stromquelle 11 und dem Schalter Q1 verläuft eine erste Abgriffsleitung A1 mit einer zweiten Stromquelle 12, die auf 50 mA dimensioniert ist, sowie einem zweiten Schalter Q2 mit einem Steueranschluß ST2, der wiederum mit einem entsprechenden Anschluß der Steuervorrichtung 10 verbunden ist. Eine zweite Abgriffsleitung A2, die einerseits zwischen der LED D4 und der LED D5 angeschlossen ist, umfaßt eine Stromquelle 13, die auf 60 mA dimensioniert ist sowie einen Schalter Q3. Eine dritte Abgriffsleitung A3 ist zwischen der LED D3 und der LED D4 angeschlossen und weist eine vierte Stromquelle 14 auf, die auf 70 mA dimensioniert ist, sowie einen Schalter Q4. Die Schalter Q3 und Q4 weisen Steueranschlüsse ST3 und ST4 auf, die mit entsprechenden Anschlüssen der Steuervorrichtung 10 verbunden sind. Seriell zur Versorgungsspannung V_{B} ist ein Meßwiderstand R angeordnet, an dem eine Meßspannung Uₘₑₛₛ abfällt, die dem Strom proportional ist, der durch die aktivierten LEDs fließt. Die Spannung Uₘₑₛₛ wird ebenfalls der Steuervorrichtung 10 zugeführt.

Zur Funktionsweise: Zunächst sei der Schalter Q1 eingeschaltet, so daß die LEDs D1 bis D6 aktiviert sind. Fällt nun die Versorgungsspannung V_{B} ab, die ebenfalls der Steuervorrichtung 10 zugeführt wird, so aktiviert die Steuervorrichtung 10 die Abgriffsleitung A1. Dadurch sind nur mehr die LEDs D1 bis D5 in Betrieb, jedoch werden diese mit einem höherem Strom durchflossen als zuvor die Serienschaltung aus den LEDs D1 bis D6. Mit zunehmendem Abfallen der Versorgungsspannung V_{B} wird zunächst die Abgriffsleitung A2, bei noch weiterem Abfallen schlielich die Abgriffsleitung A3 aktiviert.

Strichpunktiert ist ein optionales lichtempfindliches Element 12, bevorzugt eine Fotodiode oder ein Fototransistor, eingezeichnet und ebenfalls mit der Steuervorrichtung 10 verbunden. Das lichtempfindliche Element 12 ist so angeordnet, daß es die von den jeweils aktivierten LEDs erzielte Lichtstärke mißt und ein damit korreliertes Signal der Steuervorrichtung 10 zuführt. Der Strom durch die jeweils aktivierten LEDs wird bevorzugt von der Steuervorrichtung 10 durch Pulsweitenmodulation geregelt.

Block B in Figur 2 zeigt eine bevorzugte räumliche Anordnung der Dioden D1 bis D6, so daß ein weitgehend homogenes Leuchtbild auch bei Aktivierung einer der Abgriffsleitungen A1 bis A3 ermöglicht wird.

## Patentansprüche

1. Anordnung zur Ansteuerung einer Anzahl n von lichtemittierenden Dioden mit
- einem Versorgungsspannungsanschluß (V_{B});
- einer Serienschaltung einer Anzahl n von lichtemittierenden Dioden (D1 bis D6);
- wobei seriell zur Serienschaltung der Anzahl n von lichtemittierenden Dioden (D1 bis D6) eine erste Stromquelle (I1) und ein erster Schalter (Q1) angeordnet sind;
**dadurch gekennzeichnet,**
**daß** die Anordnung weiterhin aufweist:
- eine Abgriffsleitung (A1), die eine Anzahl m, m<n, der Anzahl n von lichtemittierenden Dioden (D1 bis D6) überbrückt, wobei in der Abgriffsleitung (A2) eine zweite Stromquelle (I2) und ein zweiter Schalter (Q2) angeordnet sind.

2. Anordnung nach Anspruch 1,
**dadurch gekennzeichnet,**
**daß** sie eine Vielzahl von Abgriffsleitungen (A1, A2, A3) mit jeweils zugeordneter Stromquelle (I2, I3, I4) und zugeordnetem Schalter (Q2, Q3, Q4) aufweist, wobei von jeder Abgriffsleitung (A1, A2, A3) eine unterschiedliche Anzahl von lichtemittierenden Dioden überbrückt wird.

3. Anordnung nach Anspruch 2,
**dadurch gekennzeichnet,**
**daß** die Schalter (Q1, Q2, Q3, Q4) als low-side-switches ausgeführt sind.

4. Anordnung nach Anspruch 2,
**dadurch gekennzeichnet,**
**daß** die Schalter (Q1, Q2, Q3, Q4) als high-side-switches ausgeführt sind.

5. Anordnung nach einem der Ansprüche 2 bis 4,
**dadurch gekennzeichnet,**
**daß** die Stromquellen (I1, I2, I3, I4) unterschiedlich dimensioniert sind, wobei einer Abgriffsleitung eine auf einen umso höheren Strom dimensionierte Stromquelle zugeordnet ist, je mehr lichtemittierende Dioden von ihr überbrückt werden.

6. Anordnung nach einem der vorhergehenden Ansprüche,
**dadurch gekennzeichnet,**
**daß** die mindestens eine Abgriffsleitung (A1, A2, A3) parallel geschaltet ist zur Serienschaltung aus der von ihr überbrückten Anzahl m von lichtemittierenden Dioden (D1 bis D6), der ersten Stromquelle (I1) und dem ersten Schalter (Q1), wobei seriell zu dieser Parallelschaltung eine Strommeßvorrichtung (R) angeordnet ist.

7. Anordnung nach Anspruch 6,
**dadurch gekennzeichnet,**
**daß** die Strommeßvorrichtung (R) ein Meßsignal (Uₘₑₛₛ) an eine Steuervorrichtung (10) bereitstellt, wobei die Steuervorrichtung (10) ausgelegt ist, die an die lichtemittierenden Dioden (D1 bis D6) bereitgestellte Energie im Hinblick auf die zugehörige Stromquelle zu variieren, insbesondere zu regeln.

8. Anordnung nach Anspruch 7,
**dadurch gekennzeichnet,**
**daß** die Energie in Form eines pulsweitenmodulierten Signals zugeführt wird, wobei die Steuervorrichtung (10) ausgelegt ist, die Energie durch Änderung der Parameter des pulsweitenmodulierten Signals zu variieren.

9. Anordnung nach einem der vorhergehenden Ansprüche,
**dadurch gekennzeichnet,**
**daß** sie weiterhin ein lichtempfindliches Element (12) umfaßt zur Ermittlung der von den eingeschalteten lichtemittierenden Dioden abgegebenen Lichtstärke .

10. Anordnung nach einem der Ansprüche 2 bis 9,
**dadurch gekennzeichnet,**
**daß** die Steuervorrichtung (10) ausgelegt ist, die Serienschaltung der Anzahl n von lichtemittierenden Dioden (D1 bis D6) oder eine der Abgriffsleitungen (A1, A2, A3) zu aktivieren in Abhängigkeit einer Größe, die mit der am Versorgungsspannungsanschluß angelegten Versorgungsspannung (V_{B}) korreliert ist.

11. Anordnung nach Anspruch 10,
**dadurch gekennzeichnet,**
**daß** die mit der Versorgungsspannung (V_{B}) korrelierte Größe die von den eingeschalteten Dioden erzielte Lichtstärke (L) und/oder die in der Anordnung, insbesondere in den Dioden, umgesetzte Verlustleistung (Pv) und/oder die Versorgungsspannung (V_{B}) selbst ist.

12. Anordnung nach einem der vorhergehenden Ansprüche,
**dadurch gekennzeichnet,**
**daß** mindestens eine Stromquelle (E1, E2, E3, E4) als ohmscher Widerstand realisiert ist.

13. Verfahren zum Betreiben einer Anordnung zum Ansteuern einer Anzahl n von in Serie geschalteten lichtemittierenden Dioden, wobei seriell zur Serienschaltung der Anzahl n von lichtemittierenden Dioden (D1 bis D6) eine erste Stromquelle (I1) und ein erster Schalter (Q1) angeordnet sind, wobei die Anordnung einen Versorgungsspannungsanschluß (V_{B}) und mindestens eine Abgriffsleitung (A1) aufweist, die eine Anzahl m, m<n, der Anzahl n von lichtemittierenden Dioden überbrückt, wobei in jeder Abgriffsleitung (A1) eine weitere Stromquelle (I2) und ein weiterer Schalter (Q2) angeordnet sind, folgende Schritte umfassend:
a) Betreiben einer ersten Anzahl von in Serie geschalteten lichtemittierenden Dioden;
b) Ermitteln einer mit einer Versorgungsspannung (V_{B}) für die lichtemittierenden Dioden korrelierten Größe;
c) im Hinblick auf diese Größe: Aktivieren der Serienschaltung der Anzahl n von lichtemittierenden Dioden (D1 bis D6) oder einer Abgriffsleitung (A1, A2, A3).
